# EUROPEAN PATENT APPLICATION

(11) **EP 4 494 869 A1**
(43) Date of publication of application: **22.01.2025**
(21) Application number: 23770739.3
(22) Date of filing: 13.03.2023
(51) Int. Cl.: B32B 27/32, C08L 23/02, C08L 23/08, C08L 23/26

(54) **MULTILAYER STRUCTURE**

(30) Priority: 14.03.2022 JP 2022039634
(71) Applicant: Mitsubishi Chemical Corporation, Tokyo 100-8251 (JP)
(72) Inventor: TERAOKA, Kota, Tokyo 100-8251 (JP)
(74) Representative: Hoffmann Eitle
(86) International application number: PCT/JP2023/009660
(87) International publication number: WO 2023/176784

(57) **Abstract**

A multilayer structure easily recyclable and having excellent transparency and impact resistance is provided as follows. A multilayer structure includes: a polar group-containing resin layer (A) including a polar group-containing resin (a) including an ethylene-vinyl alcohol copolymer and/or a polyamide; a polyolefin resin layer (B) including a polyolefin resin (b1) and a compatibilizer (b2); and an adhesive resin layer (C), wherein the compatibilizer (b2) has a melt flow rate of 600 or less g/10 minutes (at 190°C with a load of 2160 g), and the compatibilizer (b2) has a content of 10 to 200 parts by mass per 100 parts by mass of the polar group-containing resin (a).

## Description

### TECHNICAL FIELD

The present disclosure relates to a multilayer structure and more specifically to a multilayer structure easily recyclable and having excellent transparency and impact resistance.

### BACKGROUND ART

Polar group-containing resins such as ethylene-vinyl alcohol copolymers (hereinafter also referred to as "EVOH") and polyamide resins (hereinafter also referred to as "PA resin") are used by being molded into multilayer structures for food and other packaging films and containers, usually by melt molding.

Recycling technologies for the purpose of reducing wastes of plastic packaging materials are known, in which discards produced in the process of producing multilayer structures of these materials using polar group-containing resins and polyolefin resins are recovered, miniaturized by pulverizing, and melt-kneaded to produce a resin composition, which is granulated and molded to be reused as regrind layers of multilayer structures. Unfortunately, the polar group-containing resin and the polyolefin resin in the thus obtained resin composition have poor compatibility and poor recyclability. Therefore, compatibilizers are added in the recycling process in order to enhance the compatibility between the polar group-containing resin and the polyolefin resin. However, it has been difficult to select appropriate timing and amount to use compatibilizers in the recycling process.

In order to solve such a problem, for example, JP-A-2018-502743discloses a multi-layer structure comprising: a) at least one layer comprising a polyolefin component comprising i) 60 to 94 weight percent of a first component selected from the group consisting of ethylene homopolymer, ethylene copolymer, polypropylene homopolymer, polypropylene copolymer, and combinations thereof, ii) 0-35 weight percent of a functional polymer component, and iii) 1-35 weight percent of a compatibilizer component comprising an anhydride and/or carboxylic acid functionalized ethylene/alphaolefin interpolymer having a melt viscosity (177°C) less than, or equal to, 200,000 cP and a density from 0.855 to 0.94 g/cc; b) at least one tie layer comprising maleic-anhydride grafted polymer with a melt index of less than 50 dg/min, wherein the tie layer does not contain the compatibilizer component; and c) at least one polar layer comprising a polar polymer.

### SUMMARY

### PROBLEMS TO BE SOLVED BY THE DISCLOSURE

According to JP-A-2018-502743, the recyclability of the multilayer structure can be improved because the multilayer structure includes a compatibilizer in advance. However, there is a problem in that the transparency and the impact resistance of the multilayer structure itself are reduced.

The inventor of the present disclosure has speculated that the above problem is caused by the compatibilizer added to improve the recyclability. The present disclosure provides an easily recyclable multilayer structure while suppressing reduction in transparency and impact resistance of the multilayer structure itself.

### MEANS FOR SOLVING THE PROBLEMS

The inventor of the present disclosure has conducted elaborate studies in light of such situations and found that the above problem can be solved by providing a polyolefin resin layer including a polyolefin resin and a compatibilizer having a particular melt flow rate (MFR) in the multilayer structure including a polar group-containing resin layer.

Specifically, the present disclosure provides the following [1] to [10].
[1] A multilayer structure comprising:
   a polar group-containing resin layer (A) comprising a polar group-containing resin (a) comprising an ethylene-vinyl alcohol copolymer and/or a polyamide;
   a polyolefin resin layer (B) comprising a polyolefin resin (b1) and a compatibilizer (b2); and
   an adhesive resin layer (C), wherein
   the compatibilizer (b2) has a melt flow rate of 600 or less g/10 minutes (at 190°C with a load of 2160 g), and
   the compatibilizer (b2) has a content of 10 to 200 parts by mass per 100 parts by mass of the polar group-containing resin (a).
[2] The multilayer structure according to [1], wherein the compatibilizer (b2) has a content of 1 to 99% by mass in the polyolefin resin layer (B).
[3] The multilayer structure according to [1] or [2], wherein the compatibilizer (b2) has a melt flow rate of 0.1 to 100 g/10 minutes (at 190°C with a load of 2160 g).
[4] The multilayer structure according to any one of [1] to [3], wherein the compatibilizer (b2) is a maleic anhydride-modified ethylene-butene copolymer.
[5] The multilayer structure according to any one of [1] to [3], wherein the compatibilizer (b2) is an ethylene-vinyl acetate copolymer.
[6] The multilayer structure according to any one of [1] to [5], wherein a melt flow rate ratio (b1/b2) of the polyolefin resin (b1) to the compatibilizer (b2) is 0.003 to 300.
[7] The multilayer structure according to any one of [1] to [6], wherein the polyolefin resin layer (B) comprises less than 5% by mass of an inorganic filler as an optional component.
[8] The multilayer structure according to any one of [1] to [7], wherein the polyolefin resin (b1) is one or more polyethylenes selected from the group consisting of linear low-density polyethylene, low-density polyethylene, very-low-density polyethylene, medium-density polyethylene, and high-density polyethylene.
[9] The multilayer structure according to any one of [1] to [8], further comprising a base material layer (D1).
[10] A resin composition comprising a polar group-containing resin (a) comprising an ethylene-vinyl alcohol copolymer and/or a polyamide, a polyolefin resin (b1), a compatibilizer (b2), and an adhesive resin, wherein the compatibilizer (b2) has a melt flow rate of 600 or less g/10 minutes (at 190°C with a load of 2160 g), and the compatibilizer (b2) has a content of 10 to 200 parts by mass per 100 parts by mass of the polar group-containing resin (a).

### EFFECTS OF THE DISCLOSURE

The multilayer structure of the present disclosure includes a polar group-containing resin layer (A) including a polar group-containing resin (a), a polyolefin resin layer (B) including a polyolefin resin (b1) and a compatibilizer (b2), and an adhesive resin layer (C), wherein the compatibilizer (b2) has a melt flow rate of 600 or less g/10 minutes (at 190°C with a load of 2160 g), and the compatibilizer (b2) has a content of 10 to 200 parts by mass per 100 parts by mass of the polar group-containing resin (a). The multilayer structure of the present disclosure therefore has excellent transparency and impact resistance.

### EMBODIMENTS OF THE DISCLOSURE

Although specific modes of the present disclosure will be described below, the present disclosure is not limited to these modes.

In the present disclosure, the expression "x and/or y", wherein x and y are each a given configuration or component, is intended to mean the following three meanings: only x; only y; and x and y.

In the present disclosure, "X to Y", wherein X and Y are given numbers, is intended to encompass "preferably greater than X" and "preferably less than Y" unless otherwise specified, in addition to a meaning of "X or more and Y or less".

Further, the expression "X or more" (X is a given number) or "Y or less" (Y is a given number) is intended to encompass the meaning "preferably more than X" or "preferably less than Y".

The multilayer structure of the present disclosure includes a polar group-containing resin layer (A) including a polar group-containing resin (a), a polyolefin resin layer (B) including a polyolefin resin (b1) and a compatibilizer (b2), and an adhesive resin layer (C), wherein the compatibilizer (b2) has a melt flow rate of 600 or less g/10 minutes (at 190°C with a load of 2160 g), and the compatibilizer (b2) has a content of 10 to 200 parts by mass per 100 parts by mass of the polar group-containing resin (a).

Each component will be described below.

### [Polar Group-Containing Resin Layer (A)]

The polar group-containing resin layer (A) of the multilayer structure of the present disclosure includes a polar group-containing resin (a). The polar group-containing resin (a) is any resin that contains a polar group, but preferably a thermoplastic resin containing a polar group. The polar group-containing resin (a) includes EVOH and/or a PA resin. The polar group-containing resin (a) is more preferably EVOH and/or a PA resin, more preferably EVOH.

The content of the polar group-containing resin (a) in the polar group-containing resin layer (A) is, for example, but is not limited to, 1 % by mass or more, 10% by mass or more, 20% by mass or more, 30% by mass or more, or 40% by mass or more. It is preferable that the polar group-containing resin (a) is a main component. The content of the polar group-containing resin (a) in the polar group-containing resin layer (A) is more preferably 50% by mass or more, even more preferably 60% by mass or more, 70% by mass or more, 80% by mass or more, 90% by mass or more, 95% by mass or more, or 100% by mass.

The polar group-containing resin layer (A) may contain known additives such as a plasticizer, a lubricant, a thermal stabilizer, a photostabilizer, a UV absorber, an antioxidant, a nucleating agent, a colorant, an antistatic agent, a surfactant, an antimicrobial agent, a drying agent, an oxygen absorber, and an antiblocking agent in a range that does not impair the effects of the present disclosure (for example, less than 30% by mass). Polar group-containing resins may be blended. These can be used alone or in combination of two or more.

### (EVOH)

The EVOH used as the polar group-containing resin (a) is a resin obtained typically by saponifying an ethylene-vinyl ester copolymer, which is a copolymer of ethylene and a vinyl ester monomer, and is a non-water-soluble thermoplastic resin. Vinyl acetate is commonly used as the vinyl ester monomer in terms of cost efficiency.

Ethylene and a vinyl ester monomer can be copolymerized by any known polymerization method such as solution polymerization, suspension polymerization, or emulsion polymerization. Typically, solution polymerization using methanol as a solvent is used. The resultant ethylene-vinyl ester copolymer can be saponified by any known method.

The thus produced EVOH is mainly composed of an ethylene structural unit and a vinyl alcohol structural unit, and if the saponification degree is less than 100 mol%, the EVOH includes a small amount of the vinyl ester structural unit remaining as an unsaponified portion.

In the present disclosure, "mainly composed of" means the largest amount of constituent in a target, typically, preferably 50% by mass or more in the target, more preferably 60% by mass, even more preferably 70% by mass or more, particularly preferably 80% by mass or more, more particularly preferably 90% by mass or more, or may be 100% by mass.

Typically, vinyl acetate is used as the vinyl ester monomer, in terms of commercial availability and high efficiency in impurity treatment during manufacture. Other examples of the vinyl ester monomer include aliphatic vinyl esters such as vinyl formate, vinyl propionate, vinyl valerate, vinyl butyrate, vinyl isobutyrate, vinyl pivalate, vinyl caprate, vinyl laurate, vinyl stearate, and vinyl versatate, and aromatic vinyl esters such as vinyl benzoate. Typically, aliphatic vinyl esters having 3 to 20 carbon atoms, preferably 4 to 10 carbon atoms, and particularly preferably 4 to 7 carbon atoms can be used. These can be used alone or in combination of two or more.

The EVOH is usually made from petroleum-derived raw materials such as naphtha, but may be made from raw materials derived from natural gas such as shale gas, or plant-derived raw materials refined from sugar, starch, or other components contained in sugarcane, sugar beet, corn, potatoes, and the like, or cellulose or other components contained in plants such as rice, wheat, and millet.

The content of the ethylene structural unit in the EVOH can be controlled by the pressure of ethylene during copolymerization of a vinyl ester monomer and ethylene and is preferably 20 to 60 mol%. The content of the ethylene structural unit is more preferably 25 to 50 mol% and particularly preferably 25 to 35 mol%. If the content is too low, the gas barrier properties under high humidity and the melt moldability tend to be reduced. Conversely, if too high, the gas barrier properties tend to be reduced.

It is noted that the content of the ethylene structural unit can be measured, for example, in conformity with ISO14663.

The saponification degree of the vinyl ester component in the EVOH can be controlled by the amount of saponification catalyst (typically, an alkaline catalyst such as sodium hydroxide is used), temperature, time, and the like during saponification of the ethylene-vinyl ester copolymer and is typically 90 to 100 mol%, preferably 95 to 100 mol%, and particularly preferably 99 to 100 mol%. If the saponification degree is low, the gas barrier properties, thermal stability, moisture resistance, and the like tend to be reduced.

The saponification degree of the EVOH can be measured in conformity with JIS K6726 (where EVOH is a solution homogeneously dissolved in a water/methanol solvent).

The EVOH has a melt flow rate (MFR as measured in conformity with JIS K7210) (at 210°C with a load of 2160 g) of typically 0.5 to 100 g/10 minutes, preferably 1 to 50 g/10 minutes, and particularly preferably 3 to 35 g/10 minutes. If the MFR is too high, the moldability tends to be unstable. If too low, the viscosity tends to be too high to make melt extrusion difficult.

The MFR serves as an index of the degree of polymerization of the EVOH and can be adjusted by the amount of polymerization initiator and/or the amount of solvent during copolymerization of ethylene and a vinyl ester monomer.

The EVOH may further include a structural unit derived from the following comonomers in a range that does not impair the effects of the present disclosure (for example, 10 mol% or less of the EVOH).

Examples of the comonomers include olefins such as propylene, 1-butene, and isobutene; hydroxyl-containing α-olefins such as 3-buten-1-ol, 3-butene-1,2-diol, 4-penten-1-ol, and 5-hexen-1,2-diol, and derivatives including esterification products and acylation products of these hydroxyl-containing α-olefins; hydroxyalkylvinylidenes such as 2-methylenepropane-1,3-diol and 3-methylenepentane-1 ,5-diol; hydroxyalkylvinylidene diacetates such as 1,3-diacetoxy-2-methylenepropane, 1,3-dipropionyloxy-2-methylenepropane, and 1,3-dibutyryloxy-2-methylenepropane; unsaturated acids such as acrylic acid, methacrylic acid, crotonic acid, phthalic acid (anhydride), maleic acid (anhydride), and itaconic acid (anhydride), salts of these acids, and mono- or dialkyl esters of these acids, the one or two alkyl groups each having 1 to 18 carbon atoms; acrylamide and analogues thereof such as N-alkylacrylamides in which the alkyl has 1 to 18 carbon atoms, N,N-dimethylacrylamide, 2-acrylamidopropanesulfonic acid and salts thereof, and acrylamidopropyldimethylamine and acid salts or quaternary salts thereof; methacrylamide and analogues thereof such as N-alkylmethacrylamides in which the alkyl has 1 to 18 carbon atoms, N,N-dimethylmethacrylamide, 2-methacrylamidopropanesulfonic acid and salts thereof, and methacrylamidopropyldimethylamine and acid salts or quaternary salts thereof; N-vinylamides such as N-vinylpyrrolidone, N-vinylformamide, and N-vinylacetamide; vinyl cyanide compounds such as acrylonitrile and methacrylonitrile; vinyl ethers such as alkyl vinyl ethers in which the alkyl has 1 to 18 carbon atoms, hydroxyalkyl vinyl ethers, and alkoxyalkyl vinyl ethers; halogenated vinyl compounds such as vinyl chloride, vinylidene chloride, vinyl fluoride, vinylidene fluoride, and vinyl bromide; vinyl silane compounds such as trimethoxyvinylsilane; halogenated allylated compounds such as allyl acetate and allyl chloride; allyl alcohol compounds such as allyl alcohol and dimethoxyallyl alcohol; trimethyl(3-acrylamido-3-dimethylpropyl)ammonium chloride, and acrylamido-2-methylpropanesulfonic acid. These can be used alone or in combination of two or more.

In particular, EVOH obtained by copolymerizing hydroxyl-containing α-olefins, that is, EVOH having a hydroxyl group in side chains, is preferred in that the secondary formability is better while maintaining gas barrier properties. EVOH having a primary hydroxyl group in side chains is more preferred. EVOH having a 1,2-diol structure in side chains is particularly preferred.

As the EVOH having a primary hydroxyl group in side chains, EVOH in which the content of the structural unit derived from a monomer having the primary hydroxyl group is typically 0.1 to 20 mol% of the EVOH, 0.5 to 15 mol%, and especially 1 to 10 mol% is preferred.

"Post-modified" EVOH such as urethanized EVOH, acetalized EVOH, cyanoethylated EVOH, and oxyalkylenated EVOH may be used as the EVOH.

Furthermore, the EVOH may be a mixture of two or more kinds of EVOH, for example, with different saponification degrees, different degrees of polymerization, and/or different copolymerization components.

### (PA Resin)

The PA resin used as the polar group-containing resin (a) is not limited, and examples of common polyamide resins include homopolymers such as polycaproamide (nylon-6), poly-ω-aminoheptanoic acid (nylon-7), poly-ω-aminononanoic acid (nylon-9), polyundecanamide (nylon-11), and polylauryllactam (nylon-12). Examples of copolyamide resins include aliphatic polyamides such as polyethylenediamineadipamide (nylon-26), polytetramethyleneadipamide (nylon-46), polyhexamethyleneadipamide (nylon-66), polyhexamethylenesebacamide (nylon-610), polyhexamethylenedodecamide (nylon-612), polyoctamethyleneadipamide (nylon-86), polydecamethyleneadipamide (nylon-108), caprolactam/lauryllactam copolymer (nylon-6/12), caprolactam/ω-aminononanoic acid copolymer (nylon-6/9), caprolactam/hexamethylenediammonium adipate copolymer (nylon-6/66), lauryllactam/hexamethylenediammonium adipate copolymer (nylon-12/66), ethylenediamineadipamide/hexamethylenediammonium adipate copolymer (nylon-26/66), caprolactam/hexamethylenediammonium adipate/hexamethylenediammonium sebacate copolymer (nylon-66/610), and ethyleneammonium adipate/hexamethylenediammonium adipate/hexamethylenediammonium sebacate copolymer (nylon-6/66/610), aromatic polyamides such as polyhexamethyleneisophthalamide, polyhexamethyleneterephthalamaide, poly-m-xylyleneadipamide, hexamethyleneisophthalamide/terephthalamide copolymer, poly-p-phenyleneterephthalamide, and poly-p-phenylene-(3,4'-diphenyl ether)terephthalamide, amorphous polyamides, and modified polyamide resins obtained by modifying these polyamide resins with an aromatic amine such as methylenebenzylamine or m-xylenediamine, and m-xylylenediammonium adipate. Alternatively, terminal-modified polyamide resins of these polyamide resins may be used. Terminal-modified polyamide resins are preferred. These PA resins may be used alone or in combination of two or more.

The PA resin has a melting point of 160 to 270°C, more preferably 180 to 250°C, and particularly preferably 200 to 230°C. If the melting point of the PA resin is too low, the heat resistance tends to be reduced. On the other hand, if the melting point of the PA resin is too high, the difference of melting point from the resins used in the other layers is large, which may be unfavorable in terms of moldability.

Based on the above, examples of the preferred PA resin include nylon-6 (melting point: about 220°C) and nylon-6/66 (melting point: about 200°C).

### [Polyolefin Resin Layer (B)]

The polyolefin resin layer (B) of the multilayer structure of the present disclosure includes a polyolefin resin (b1) and a compatibilizer (b2). Since the multilayer structure of the present disclosure has the polyolefin resin layer (B) including a polyolefin resin (b1) and a compatibilizer (b2), the compatibility of the multilayer structure as a whole after recycling can be improved, thereby facilitating the recycling of the multilayer structure.

The total content of the polyolefin resin (b1) and the compatibilizer (b2) in the polyolefin resin layer (B) is, for example, but is not limited to, 1% by mass or more, 2% by mass or more, 10% by mass or more, 20% by mass or more, 30% by mass or more, or 40% by mass or more. However, the total content of the polyolefin resin (b1) and the compatibilizer (b2) in the polyolefin resin layer (B) is more preferably 50% by mass or more, and even more preferably 60% by mass or more, 70% by mass or more, 80% by mass or more, 90% by mass or more, 95% by mass or more, or 100% by mass.

It is preferable that the polyolefin resin layer (B) includes no EVOH. Even when EVOH is included, the content of EVOH in the polyolefin resin layer (B) is preferably 5% by mass or less.

The content of the polyolefin resin (b1) in the polyolefin resin layer (B) is preferably, but is not limited to, 1 to 99% by mass, more preferably 30 to 95% by mass, and particularly preferably 50 to 90% by mass. In terms of recyclability, the content within the above range is preferred.

The content of the compatibilizer (b2) in the polyolefin resin layer (B) is preferably, but is not limited to, 1 to 99% by mass, more preferably 5 to 50% by mass, and particularly preferably 10 to 30% by mass. In terms of molding processability, the content within above range is preferred.

The polyolefin resin layer (B) may contain known additives such as a plasticizer, a lubricant, a thermal stabilizer, a photostabilizer, a UV absorber, an antioxidant, a nucleating agent, a colorant, an antistatic agent, a surfactant, an antimicrobial agent, a drying agent, an oxygen absorber, an antiblocking agent, and an inorganic filler as optional components in a range that does not impair the effects of the present disclosure (for example, less than 30% by mass, preferably less than 5% by mass). Other polyolefin resins or compatibilizers may be blended.

### (Polyolefin Resin (b1))

Examples of the polyolefin resin (b1) used in the polyolefin resin layer (B) include, but are not limited to, polyethylenes such as linear low-density polyethylene (LLDPE), low-density polyethylene (LDPE), very-low-density polyethylene (VLDPE), medium-density polyethylene (MDPE), and high-density polyethylene (HDPE), and olefin homopolymers and copolymers such as polypropylene (PP), ethylene-vinyl acetate copolymers (EVA), ionomers, ethylene-propylene (block or random) copolymers, ethylene-acrylic acid copolymers, ethylene-acrylic acid ester copolymers, ethylene-methacrylic acid copolymers, ethylene-methacrylic acid ester copolymers, propylene-α-olefin (α-olefin having 4 to 20 carbon atoms) copolymers, ethylene-α-olefin (α-olefin having 4 to 20 carbon atoms) copolymers, polybutene, polypentene, and polymethylpentene, and blends of these olefin homopolymers and copolymers. These are used alone or in combination of two or more. Among these, polyethylenes, ethylene-vinyl acetate copolymers (EVA), ethylene-propylene (block or random) copolymers, polypropylene (PP), and blends of these polymers are preferred in terms of cost efficiency and mechanical properties. Further, polyethylenes, polypropylene (PP), and ethylene-propylene (block or random) copolymers are particularly preferred in that the effects of the present disclosure are particularly excellent.

The polyolefin resin (b1) has a melt flow rate (MFR) (at 190°C with a load of 2160 g) of typically 0.1 to 50 g/10 minutes and even more preferably about 0.5 to 30 g/10 minutes.

### (Compatibilizer (b2))

The compatibilizer (b2) used in the polyolefin resin layer (B) has a melt flow rate (MFR) of 600 or less g/10 minutes (at 190°C with a load of 2160 g). When the MFR of the compatibilizer (b2) is 600 or less g/10 minutes, the multilayer structure with excellent transparency and impact resistance can be obtained. If the MFR of the compatibilizer (b2) exceeds 600 g/10 minutes, the transparency and the impact resistance tend to be inferior.

The MFR of the compatibilizer (b2) is preferably 0.1 to 300 g/10 minutes, more preferably 1 to 100 g/10 minutes, and particularly preferably 10 to 30 g/10 minutes. In terms of the compatibility with the polyolefin resin (b1), the MFR within the above range is preferred.

The MFR serves as an index of the degree of polymerization of the compatibilizer (b2) and can be adjusted by the amount of polymerization initiator, the amount of solvent, or the amount of modification.

The compatibilizer (b2) is not limited to particular kinds of resins as long as the MFR is within the above range and the compatibilizer (b2) has compatibility with the polar group-containing resin (a) and the polyolefin resin (b1). Examples include ethylene-vinyl acetate copolymers and saponified ethylene-vinyl acetate copolymers, polyolefin resins, and carboxyl-containing modified polyolefin polymers obtained by chemically bonding an unsaturated carboxylic acid or anhydride thereof to ethylene-vinyl acetate copolymers or polyolefin resins by addition reaction, graft reaction, or the like. Examples of the carboxyl-containing modified polyolefin polymers include maleic anhydride-modified polymers, such as maleic anhydride-modified polyethylene, maleic anhydride-modified polypropylene, maleic anhydride-modified ethylene-propylene (block and random) copolymers, maleic anhydride-modified ethylene-butene (block and random) copolymers, maleic anhydride-modified ethylene-ethyl acrylate copolymers, maleic anhydride-modified ethylene-vinyl acetate copolymers, maleic anhydride-modified polycyclic olefin resins, and maleic anhydride-modified polyolefin resins. These may be used alone or in combination of two or more. When two or more kinds of compatibilizers (b2) with different MFRs are used, their weighted average is considered as the MFR of the compatibilizer (b2).

The content of the compatibilizer (b2) with respect to the polar group-containing resin (a) in the multilayer structure of the present disclosure is 10 to 200 parts by mass, preferably 30 to 150 parts by mass, and more preferably 50 to 100 parts by mass per 100 parts by mass of the polar group-containing resin (a). The content within the above range is preferred in that the compatibility between the polar group-containing resin (a) and the polyolefin resin can be further increased. If the content of the compatibilizer (b2) is less than 10 parts by mass per 100 parts by mass of the polar group-containing resin (a), the improvement in recyclability tends to be not achieved. If the content of the compatibilizer (b2) exceeds 200 parts by mass per 100 parts by mass of the polar group-containing resin (a), the transparency and the impact resistance tend to be inferior.

The MFR ratio (b1/b2) of the polyolefin resin (b1) to the compatibilizer (b2) is preferably, but is not limited to, 0.003 to 300, more preferably 0.03 to 60, and particularly preferably 0.1 to 30. When the MFR ratio is within the above range, the effects of the present disclosure can be further enhanced.

Blending hydrotalcites in the compatibilizer (b2) can further improve the thermal stability of the polyolefin resin (B) and can further suppress gelation of the polyolefin resin (B).

Examples of the hydrotalcites include hydrotalcite solid solutions represented by the following general formula (1).
[Chem. 1]

[(M₁²⁺)_{y1}(M₂²⁺)_{y2}]₁₋ₓMₓ³⁺(OH)₂Aⁿ⁻_{x/n}·mH₂O (1)

[where M₁²⁺ is at least one metal selected from Mg, Ca, Sr, and Ba, M₂²⁺ is at least one metal selected from Zn, Cd, Pb, and Sn, Mₓ³⁺ is a trivalent metal, Aⁿ⁻is an n-valent anion, x, y1, y2, and m are positive values represented by 0<x≤0.5, 0.5<y1<1, y1+y2=1, and 0≤m<2, respectively.]

In the above general formula (1), Mg and Ca are preferred as M₁²⁺, and Zn and Cd are preferred as M₂²⁺. Examples of Mₓ³⁺ include Al, Bi, In, Sb, B, Ga, and Ti. These can be used alone or in combination of two or more. Among these, Al is preferable. In the above general formula (1), examples of Aⁿ⁻ include CO₃²⁻, OH⁻, HCO₃⁻, salicylic acid ion, citric acid ion, tartaric acid ion, NO₃⁻, I⁻, (OOC-COO)²⁻, ClO⁴⁻, CH₃COO⁻, CO₃²⁻, (OOCHC=CHCOO)²⁻, and [Fe(CN)₆]⁴⁻. These can be used alone or in combination of two or more. Among these, CO₃²⁻ and OH- are preferable.

Specific examples of the hydrotalcite solid solutions include [Mg_{0.75}Zn_{0.25}]_{0.67}Al_{0.33}(OH)₂(CO₃)_{0.165}·0.45H₂O, [Mg_{0.79}Zn_{0.21}]_{0.7}Al_{0.3}(OH)₂(CO₃)_{0.15}, [Mg_{1/7}Ca_{3/7}Zn_{3/7}]_{0.7}Al_{0.3}(OH)₂(OOCHC=CHCOO)_{0.15}·0.41H₂O, [Mg_{6/7}Cd_{1/7}]_{0.7}Al_{0.3}(OH)₂(CH₃COO)_{0.3}·0.34H₂O, [Mg_{5/7}Pd_{2/7}]_{0.7}Al_{0.30}(OH)₂(CO₃)_{0.15}·O.52H₂O, [Mg_{0.74}Zn_{0.26}]_{0.68}Al_{0.32}(OH)₂(CO₃)_{0.16}, [Mg_{0.56}Zn_{0.44}]_{0.68}Al_{0.32}(OH)₂(CO₃)_{0.16}·0.2H₂O, [Mg_{0.81}Zn_{0.19}]_{0.74}Al_{0.26}(OH)₂(CO₃)_{0.13}, [Mg_{0.75}Zn_{0.25}]_{0.8}Al_{0.20}(OH)₂(CO₃)_{0.10}·0.16H₂O, [Mg_{0.71}Zn_{0.29}]_{0.7}Al_{0.30}(OH)₂(NO₃)_{0.30}, [Mg_{0.71}Zn_{0.29}]_{0.7}Al_{0.30}(OH)₂(OOCHC=CHCOO)_{0.15}, and [Mg_{0.14}Ca_{0.57}Zn_{0.28}]_{0.7}Al_{0.30}(OH)_{2.3}·0.25H₂O. Among these, examples include [Mg_{0.75}Zn_{0.25}]_{0.67}Al_{0.33}(OH)₂(CO₃)_{0.165}·0.45H₂O, [Mg_{0.79}Zn_{0.21}]₀₇Al_{0.3}(OH)₂(CO₃)_{0.15}, [Mg_{6/7}Cd_{1/7}]_{0.7}Al_{0.3}(OH)₂(CH₃COO)_{0.3}·0.34H₂O, and [Mg_{5/7}Pd_{2/7}]_{0.7}Al_{0.30}(OH)₂(CO₃)_{0.15}·0.52H₂O.

Other examples include compounds represented by the following general formula (2).
[Chem. 2]

MₓAl_{y}(OH)_{2x+3y-2z}(E)_{z}·aH₂O (2)

[where, M is Mg, Ca, or Zn, E is CO₃ or HPO₄, x, y, and z are each a positive number, and a is 0 or a positive number.]

Specific examples of the compounds represented by the above general formula (2) include Mg_{4.5}Al₂(OH)₁₃CO₃·3.5H₂O, Mg₅Al₂(OH)₁₄CO₃·4H₂O, Mg₆Al₂(OH)₁₆CO₃·4H₂O, Mg₈Al₂(OH)₂₀CO₃·5H₂O, Mg₁₀Al₂(OH)₂₂(CO₃)₂·4H₂O, Mg₆Al₂(OH)₁₆HPO₄·4H₂O, Ca₆Al₂(OH)₁₆CO₃·4H₂O, and Zn₆Al₆(OH)₁₆CO₃·4H₂O. Similar effects can be expected not only with the above examples but also with, for example, compounds not clearly represented by a chemical formula, such as those in which some OH in Mg₂Al(OH)₉·3H₂O is substituted with CO₃ or HPO₄, and compounds in which water of crystallization is removed (a=0). In particular, among these, a compound in which M is Mg and E is CO₃ is suitably used in terms of further improving the effects achieved by hydrotalcites.

As for the particle diameter of hydrotalcites, for example, the average particle diameter is typically 10 µm or less, more preferably 5 µm or less, and particularly preferably 1 µm or less. As used herein the average particle diameter is a value measured by a LUZEX method.

Among the above hydrotalcites, it is particularly preferable to use hydrotalcite solid solutions represented by the above general formula (1) in terms of achieving better effects.

Blending a higher fatty acid metal salt in the compatibilizer (b2) can further improve the thermal stability of the polyolefin resin (B) and can further suppress gelation of the polyolefin resin (B).

Examples of the higher fatty acid metal salt include metal salts, such as lithium, sodium, potassium, and other alkali metal salts, magnesium, calcium, barium, and other alkaline earth metal salts, and zinc, copper, cobalt, iron, manganese, and other transition metal salts, of organic acids with 8 or more carbon atoms (more preferably 12 to 30 carbon atoms, particularly preferably 12 to 20 carbon atoms). Among these, alkaline earth metal salts and transition metal salts with 12 to 20 carbon atoms are preferred, especially magnesium, calcium, and zinc salts of stearic acid, hydroxystearic acid, oleic acid, and lauric acid are preferred in terms of achieving better effects.

Blending an antioxidant in the compatibilizer (b2) can further improve the thermal stability of the polyolefin resin (B) and can further suppress gelation of the polyolefin resin (B).

Examples of the antioxidant include hindered phenol compounds: dibutylhydroxytoluene, 2,5-di-t-butylhydroquinone, 2,6-di-t-butyl-p-cresol, 4,4'-thiobis-(6-t-butylphenol), 2,2'-methylene-bis(4-methyl-6-t-butylphenol), tetrakis-[methylene-3-(3',5'-di-t-butyl-4'-hydroxyphenyl)propionate]methane, N,N'-hexamethylene-bis(3,5-di-t-butyl-4'-hydroxy-hydrocinnamamide), 1,3,5-trimethyl-2,4,6tris(3,5-di-t-butyl-4-hydroxybenzyl)benzene, pentaerythritoltetrakis[3-(3,5-di-t-butyl-4-hydroxyphenyl)propionate], triethyleneglycol-bis[3-(3-t-butyl-5-methyl-4-hydroxyphenyl)propionate], 1,6-hexanediol-bis[3-(3,5-di-t-butyl-4-hydroxyphenyl)propionate], 2,4-bis-(n-octylthio)-6-(4-hydroxy-3,5-di-t-butylanilino)-1,3,5-triazine, 2,2-thio-diethylenebis[3-(3,5-di-t-butyl-4-hydroxyphenyl)propionate], octadecyl-3-(3,5-di-t-butyl-4-hydroxyphenyl)propionate, 3,5-di-t-butyl-4-hydroxy-benzylphosphonate-diethyl ester, bis(3,5-di-t-butyl-4-hydroxybenzylphosphonic acid ethyl)calcium, tris-(3,5-di-t-butyl-4-hydroxybenzyl)-isocyanurate, 2,4-bis[(octylthio)methyl]-o-cresol, isooctyl-3-(3,5-di-t-butyl-4-hydroxyphenyl)propionate, n-octadecyl-3-(3,5-di-t-butyl-4-hydroxyphenyl)propionate, 2-t-butyl-6-(3-t-butyl-2-hydroxy-5-methylbenzyl)-4-methylphenylacrylate, 2-[1-(2-hydroxy-3,5-di-t-pentylphenyl)ethyl]-4,6-di-t-pentylphenyl acrylate, 4,4'-butylidenebis(3-methyl-6-t-butylphenol), 4,4'-thiobis(3-methyl-6-t-butylphenol), and 3,9-bis{2-[3-(3-t-butyl-4-hydroxy-5-methylphenyl)-propionyloxy]-1,1-dimethylethyl}-2,4,8,10-tetraoxaspiro(5·5)undecane; phosphite compounds: triaryl phosphites such as triphenyl phosphite, tris(p-nonylphenyl)phosphite, and tris(2,4-di-t-butylphenyl)phosphite, alkyl aryl phosphites, such as monoalkyl diphenyl phosphites such as diphenylisooctyl phosphite and diphenylisodecyl phosphite, and dialkyl monophenyl phosphites such as phenyl diisooctyl phosphite and phenyl diisodecyl phosphite, trialkyl phosphites such as triisooctyl phosphite and tristearyl phosphite, and bis(2,4-di-t-butylphenyl)pentaerythritol-di-phosphite; thioether compounds: pentaerythritoltetrakis-(β-laurylthiopropionate), tetrakis[methylene-3-(dodecylthio)propionate]methane, bis[2-methyl-4-(3-n-alkylthiopropionyloxy)-5-t-butylphenyl]sulfide, dilauryl-3,3'-thiodipropionate, dimyristyl-3,3'-thiodipropionate, distearyl-3,3'-thiodipropionate, pentaerythryl-tetrakis(3-laurylthiopropionate), ditridecyl-3,3'-thiodipropionate, and 2-mercaptobenzimidazole; hindered amine compounds: dimethyl succinate-1-(2-hydroxyethyl)-4-hydroxy-2,2,6,6-tetramethylpiperidine polycondensate, poly{[6-(1,1,3,3-tetramethylbutyl)amino-1,3,5-triazine-2,4-diyl][(2,2,6,6-tetramethyl-4-piperidyl)imino]hexamethylene[(2,2,6,6-tetramethyl-4-piperidyl)imino}, N,N'-bis(3-aminopropyl)ethylenediamine-2,4-bis[N-butyl-N-(1,2,2,6,6-pentamethyl-4-piperidyl)amino]-6-chloro-1,3,5-triazine condensate, bis(2,2,6,6-tetramethyl-4-piperidyl)sebacate, bis(1,2,2,6,6-pentamethyl-4-piperidinyl)sebacate, and 2-(3,5-di-t-butyl-4-hydroxybenzyl)-2-n-butyl malonic acid bis(1,2,2,6,6-pentamethyl-4-piperidyl); benzotriazole compounds: 2-(5-methyl-2-hydroxyphenyl)benzotriazole, 2-[2-hydroxy-3,5-bis(α,α-dimethylbenzyl)phenyl]-2H-benzotriazole, 2-(3,5-di-t-butyl-2-hydroxyphenyl)benzotriazole, 2-(3-t-butyl-5-methyl-2-hydroxyphenyl)-5-chlorobenzotriazole, 2-(3,5-di-t-butyl-2-hydroxyphenyl)-5-chlorobenzotriazole, 2-(3,5-di-t-amyl-2-hydroxyphenyl)benzotriazole, 2-(2'-hydroxy-5'-t-octylphenyl)benzotriazole, methyl-3-[3-t-butyl-5-(2H-benzotriazol-2-yl)-4-hydroxyphenyl]propionate-polyethylene glycol condensate, hydroxyphenylbenzotriazole derivatives, and 2-[2-hydroxy-3-(3,4,5,6-tetra-hydrophthalimide-methyl)-5-methylphenyl]benzotriazole; and benzophenone compounds: 2-hydroxy-4-methoxybenzophenone, 2-hydroxy-4-octyloxybenzophenone, and 2,2',4,4'-tetrahydroxybenzophenone. At least one or more can be selected from these compounds. These antioxidants can be used in any form such as powder, granular, liquid, paste, and emulsion forms.

Among these, hindered phenol oxidants are preferred.
Especially, pentaerythritol-tetrakis-3-(3,5-di-t-butyl-4-hydroxyphenyl)propionate and octadecyl-3-(3,5-di-t-butyl-4-hydroxyphenyl)propionate are preferably used in terms of achieving better effects.

### [Adhesive Resin Layer (C)]

The multilayer structure of the present disclosure may further include the adhesive resin layer (C) if necessary.

The adhesive resin layer (C) is provided as a layer for bonding the polar group-containing resin layer (A) and the polyolefin resin layer (B).

Examples of an adhesive resin included in the adhesive resin layer (C) include carboxyl-containing modified polyolefin polymers obtained by chemically bonding an unsaturated carboxylic acid or anhydride thereof to polyolefin resins by addition reaction, graft reaction, or the like. Examples of the carboxyl-containing modified polyolefin polymers include maleic anhydride-modified polymers, such as maleic anhydride-modified polyethylene, maleic anhydride-modified polypropylene, maleic anhydride-modified ethylene-propylene (block and random) copolymers, maleic anhydride-modified ethylene-ethyl acrylate copolymers, maleic anhydride-modified ethylene-vinyl acetate copolymers, maleic anhydride-modified polycyclic olefin resins, and maleic anhydride-modified polyolefin resins.

These may be used alone or in combination of two or more.

Among these, maleic anhydride-modified polymers such as maleic anhydride-modified polyethylene and maleic anhydride-modified ethylene-α-olefin copolymers are suitable as the adhesive resin, in terms of contributing to suppression of gelation during melt heating and suppression of reduction in transparency, in addition to the resin adhesive properties.

The maleic anhydride-modified polymer has an acid value of typically 50 mgKOH/g or less, preferably 30 mgKOH/g or less, and particularly preferably 20 mgKOH/g or less. If the acid value is too high, the reaction points with hydroxyl groups in EVOH increases to generate a highly polymerized product in the melt kneading process, leading to lower stability in the extrusion process, and it tends to be difficult to obtain good molded products. It is noted that the lower limit of the acid value is typically 1 mgKOH/g, preferably 2 mgKOH/g. The above acid value is measured in conformity with JIS K0070.

When maleic anhydride-modified polyethylene is used as the maleic anhydride-modified polymer, the MFR (at 190°C with a load of 2160 g) is typically 0.01 to 150 g/10 minutes, preferably 0.1 to 50 g/10 minutes, more preferably 1 to 25 g/10 minutes, and even more preferably 3 to 10 g/10 minutes.

When a maleic anhydride-modified ethylene-α-olefin copolymer is used as the maleic anhydride-modified polymer, the MFR (at 230°C with a load of 2160 g) is typically 0.1 to 150 g/10 minutes, preferably 0.5 to 100 g/10 minutes, more preferably 1 to 50 g/10 minutes, and even more preferably 5 to 35 g/10 minutes. Too high a MFR or too low a MFR is unfavorable because if so, the molding tends to be failed when the multilayer structure is molded.

It is noted that the adhesive resin layer (C) can contain any appropriate additive in a range that does not impair the effects of the present disclosure (for example, less than 30% by mass). Examples of such additives include a thermal stabilizer, a UV absorber, a photostabilizer, an antioxidant, an antistatic agent, a neutralizer, an antirust agent, and a pigment.

### [Multilayer Structure]

The multilayer structure of the present disclosure will now be described.

The multilayer structure of the present disclosure is a multilayer structure having a polar group-containing resin layer (A) and a polyolefin resin layer (B) including a polyolefin resin (b1) and a compatibilizer (b2) having a melt flow rate of 600 or less g/10 minutes (at 190°C with a load of 2160 g).

The multilayer structure of the present disclosure has any layered configuration as long as the polar group-containing resin layer (A) and the polyolefin resin layer (B) are included. Except for this, the layered configuration is not limited.

The multilayer structure of the present disclosure may include an adhesive resin layer (C) if necessary. Examples of the multilayer structure include a structure in which a polar group-containing resin layer (A) is laminated with a polyolefin resin layer (B) with an adhesive resin layer (C) interposed (A/C/B), and a structure in which polyolefin resin layers (B) are laminated on both sides of a polar group-containing resin layer (A) with respective adhesive resin layers (B) interposed (B/C/A/C/B). Another layer (D) may be laminated between these layers or on a surface layer.

The lamination of the multilayer structure can be performed by any known methods. Examples of the lamination method include a method in which an adhesive resin layer (C) and a polyolefin resin layer (B) are laminated on a film, sheet, or the like serving as a polar group-containing resin layer (A) by melt extrusion, a method in which a resin composition serving as a polar group-containing resin layer (A) is laminated on an adhesive resin layer (C) or a polyolefin resin layer (B) by melt extrusion, and a method in which three layers (A), (B), and (C) are co-extruded. Another example is a method in which a solution of a resin composition serving as a polar group-containing resin layer (A) is applied on a polyolefin resin layer (B) having an adhesive resin layer (C) and thereafter the solvent is removed. Among these methods, coextrusion is preferred in terms of costs and environment.

### [Other Layer (D)]

In the multilayer structure of the present disclosure, at least one other layer (D) may be laminated between the (A)-(B) layers or between the (A)-(C) layers or on a surface layer. Examples of the other layer (D) include a base material layer (D1) for imparting strength and the like to the multilayer structure and an adhesive layer (D2) for joining this base material layer (D1) to the (A)-(C) layers.

### (Base Material Layer (D1))

A variety of thermoplastic resins (hereinafter referred to as "base material resin") are used as a material used in the base material layer (D1). Recycled resins obtained by melting and molding discards, defective products, and the like occurring in the process of producing the multilayer structure of the present disclosure may be used. Such recycled resins may include melt blends of the polar group-containing resin layer (A), the polyolefin resin layer (B), the adhesive resin layer (C), and the other layer (D).

Examples of the base material resin used in the base material layer (D1) include polyolefin resins in a broad sense, including polyethylene resins such as linear low-density polyethylene, low-density polyethylene, very-low-density polyethylene, medium-density polyethylene, high-density polyethylene, ethylene-propylene (block and random) copolymers, and ethylene-α-olefin (α-olefin having 4 to 20 carbon atoms) copolymers, polypropylene resins such as polypropylene and propylene-α-olefin (α-olefin having 4 to 20 carbon atoms) copolymers, (unmodified) polyolefin resins such as polybutene and polypentene, and modified polyolefin resins such as unsaturated carboxylic acid-modified polyolefin resins obtained by graftmodifying these polyolefins with an unsaturated carboxylic acid or an ester thereof, cyclic olefin resins, ionomers, ethylene-vinyl acetate copolymers, ethylene-acrylic acid copolymers, ethylene-acrylic acid ester copolymers, polyester resins, polyamide resins (including copolyamides), polyvinyl chloride, polyvinylidene chloride, acrylic resins, polystyrene, vinyl ester resins, polyester elastomers, polyurethane elastomers, halogenated polyolefins such as chlorinated polyethylene and chlorinated polypropylene, and aromatic or aliphatic polyketones.

### (Adhesive Layer (D2))

As an adhesive used in the adhesive layer (D2) for joining the base material layer (D1) to the (A)-(B) layers or the (A)-(C) layers, known adhesives such as organotitanium compounds, isocyanate compounds, polyester compounds, and polyurethane compounds can be used. The adhesive can be selected as appropriate according to the kind of the thermoplastic resin constituting the base material layer (D1). The adhesive resin layer (C) as well as the adhesive layer (D2) may be used as a layer for joining the base material layer (D1) to the (A)-(B) layers or the (A)-(C) layers.

The thermoplastic resin used in the base material layer (D1) and the adhesive used in the adhesive layer (D2) may contain a plasticizer, a filler, a clay (such as montmorillonite), a colorant, an antioxidant, an antistatic agent, a lubricant, a nucleating agent, an antiblocking agent, a UV absorber, a wax, and the like as conventionally known, in a range that does not impair the spirit of the present disclosure (for example, 30% by mass or less, preferably 10% by mass or less).

When the multilayer structure of the present disclosure includes at least one other layer (D) such as the base material layer (D1) and the adhesive layer (D2) as the other layer(s), for example, the following production methods can be employed.

(i) A method in which all layers are laminated by coextrusion of resins serving as (A)-(B) layers or (A)-(C) layers and a resin serving as other layer (D); (ii) a method in which a film, sheet, or the like separately formed to serve as other layer (D) is dry-laminated with (A)-(B) layers or (A)-(C) layers; (iii) a method in which resins serving as (A)-(B) layers or (A)-(C) layers are laminated by melt coextrusion on a film, sheet, or the like separately formed to serve as other layer (D), or a surface of a laminate of a combination thereof; and (iv) a method in which a solution of a resin serving as other layer (D) is applied on (A)-(B) layers or (A)-(C) layers and then the solvent is removed.

Among these, in terms of productivity, the method (i) in which resins serving as (A)-(B) layers or (A)-(C) layers and a resin serving as the other layer (D) are co-extruded is preferred.

In the case of obtaining a 3-type 5-layer structure in which polyolefin resin layers (B) are laminated on both sides of a polar group-containing resin layer (A) with adhesive resin layers (C) interposed, without using the other layer (D), the method in which these layers are collectively co-extruded is also preferred as previously mentioned.

In the case of coextrusion molding, the extrusion molding temperature (barrel temperature of the extruder) of resin compositions is selected as appropriate in a range of typically 150 to 300°C, preferably 160 to 250°C.

In the present disclosure, the barrel temperature of the extruder means the surface temperature of the extruder. When the barrel of the extruder has a plurality of sections and individual sections are set to different temperatures, the highest temperature of them is considered as the barrel temperature.

The resulting multilayer structure may undergo a (heat) stretching process, if necessary. The stretching process may be either uniaxial stretching or biaxial stretching. The biaxial stretching may be either simultaneous stretching or sequential stretching. As a stretching method, a method with a high stretch ratio can be employed among roll stretching, tenter stretching, tubular stretching, stretch blow, and vacuum/air-pressure forming methods. The stretching temperature is selected from a range of about typically 40 to 170°C, preferably 60 to 160°C, which is the temperature near the multilayer structure. If the stretching temperature is too low, the stretchability is poor. If too high, it tends to be difficult to maintain a stable stretch state.

It is noted that heat setting may be further performed for the purpose of imparting dimension stability after stretching. The heat setting can be performed by known means. For example, the multilayer structure (in the form of a stretched film) is subjected to thermal treatment with a tension state being kept, typically at 80 to 180°C, preferably 100 to 165°C, typically for about 2 to 600 seconds.

It is noted that the thickness of the multilayer structure (including the stretched multilayer structure) and the thicknesses of the polar group-containing resin layer (A) and the polyolefin resin layer (B) of the multilayer structure may vary with the layered configuration, the kinds of resins of the layers, intended use, packaging form, required physical properties, and the like, but the thickness of the entire multilayer structure is typically 10 to 5000 µm, preferably 30 to 3000 µm, and particularly preferably 50 to 2000 µm. The thickness of the polar group-containing resin layer (A) is typically 1 to 500 µm, preferably 3 to 300 µm, and particularly preferably 5 to 200 µm. The thickness of the polyolefin resin layer (B) is typically 1 to 300 µm, preferably 5 to 200 µm, and particularly preferably 10 to 100 µm. The thickness of the adhesive resin layer (C) is typically 0.5 to 250 µm, preferably 1 to 150 µm, and particularly preferably 3 to 100 µm. The thickness of the base material layer (D1) is typically 1 to 500 µm, preferably 3 to 300 µm, and particularly preferably 5 to 200 µm. The thickness of the adhesive layer (D2) is typically 0.5 to 250 µm, preferably 1 to 150 µm, and particularly preferably 3 to 100 µm.

The ratio A/B of the thickness of the polar group-containing resin layer (A) to the thickness of the polyolefin resin layer (B) (both of which is the thickness of a single layer) is typically 1/50 to 10/1, preferably 1/30 to 5/1, and particularly preferably 1/10 to 3/1. When A/B is within the above range, the effects of the present disclosure can be achieved more effectively.

The image clarity of the multilayer structure of the present disclosure is preferably 70.5% or more, more preferably 75% or more, particularly preferably 80% or more, and most preferably 100%. The image clarity of the multilayer structure can be measured, for example, by the method described in later in Examples.

The impact strength of the multilayer structure of the present disclosure is preferably 170 g or more, more preferably 200 g or more, even more preferably 230 g or more, particularly preferably 250 g or more, and especially preferably 260 g or more. The impact strength of the multilayer structure can be measured, for example, by the method described in later in Examples.

The multilayer structure of the present disclosure has excellent transparency and impact resistance because of the inclusion of a particular compatibilizer (b2) in a particular proportion, while the multilayer structure is easily recyclable.

### [Use of Multilayer Structure]

The multilayer structure of the present disclosure can be suitably used as a gas barrier layer of packaging materials for various packaging material containers and packaging films for general foods, condiments such as mayonnaise and dressing, fermented foods such as miso, fat and oil foods such as salad oil, beverages, cosmetics, and pharmaceutical products. In addition, the multilayer structure of the present disclosure is suitable for being recycled.

### [Resin Composition]

The multilayer structure of the present disclosure has excellent recyclability even without separately adding a compatibilizer when discards and molded products of the multilayer structure are recycled. In recycling, for example, a resin composition obtained by pulverizing and re-pelletizing discards and molded products of the multilayer structure of the present disclosure is used.

The resin composition includes a polar group-containing resin (a) including an ethylene-vinyl alcohol copolymer and/or a polyamide, a polyolefin resin (b1), a compatibilizer (b2), and an adhesive resin (c), wherein the compatibilizer (b2) has a melt flow rate of 600 or less g/10 minutes (at 190°C with a load of 2160 g), and the compatibilizer (b2) has a content of 10 to 200 parts by mass per 100 parts by mass of the polar group-containing resin (a).

### EXAMPLES

Hereinafter, the present disclosure will be more specifically described with Examples, but the present disclosure is not limited to the following Examples as long as it does not depart from the spirit thereof.

In Examples, "parts" means parts on a mass basis.

Prior to Examples, the following components were prepared.
- Polar group-containing resin (a): EVOH (ethylene structural unit content 32 mol%, MFR 3.5 g/10 minutes (at 210°C with a load of 2160 g), saponification degree 99.6 mol%)
- Polyolefin resin (b1-1): linear low-density polyethylene (LLDPE) ("UF230" available from Japan Polyethylene Corporation, MFR: 1.0 g/10 minutes (at 190°C with a load of 2160 g))
- Polyolefin resin (b1-2): linear low-density polyethylene (LLDPE) ("UF641" available from Japan Polyethylene Corporation, MFR: 2.1 g/10 minutes (at 190°C with a load of 2160 g))
- Compatibilizer (b2-1): maleic anhydride-modified ethylene-butene copolymer (MFR: 24 g/10 minutes (at 190°C with a load of 2160 g), density: 0.87 g/cm³)
- Compatibilizer (b2-2): a mixture (MFR: 6 g/10 minutes (at 190°C with a load of 2160 g), density: 1.0 g/cm³) of 88 parts of ethylene-vinyl acetate copolymer (vinyl acetate content: 28%, MFR: 5.7 g/10 minutes (at 190°C with a load of 2160 g)), 2 parts of saponified ethylene-vinyl acetate copolymer (ethylene structural unit content: 89 mol%, saponification degree: 99 mol%, MFR: 6.5 g/10 minutes (at 190°C with a load of 2160 g)), 5 parts of hydrotalcite solid solution, 5 parts of calcium stearate, and 0.5 parts of pentaerythritol-tetrakis[3-(3,5-di-t-butyl-4-hydroxyphenyl)propionate]
- Compatibilizer (b2-3): maleic anhydride-modified ethylene-octene copolymer ("Retain (trademark) 3000" available from the Dow Chemical Company, MFR: 660 g/10 minutes (at 190°C with a load of 2160 g), density: 0.87 g/cm³)
- Adhesive resin (c1): modified polyolefin resin ("MODIC (trademark) M512" available from Mitsubishi Chemical Corporation (MFR:1.0 g/10 minutes (at 190°C with a load of 2160 g), density: 0.900 g/cm³)
- Adhesive resin (c2): modified polyolefin resin ("MODIC (trademark) M533" available from Mitsubishi Chemical Corporation (MFR:2.5 g/10 minutes (at 190°C with a load of 2160 g), density: 0.920 g/cm³)
- Base material resin (d1): linear low-density polyethylene (LLDPE) ("UF230" available from Japan Polyethylene Corporation, MFR: 1.0 g/10 minutes (at 190°C with a load of 2160 g))

### <Example 1>

A resin composition for the polyolefin resin layer (B) was prepared by mixing 63 parts of the polyolefin resin (b1) and 37 parts of the compatibilizer (b2-1). It is noted that the amount of the compatibilizer (b2-1) is equal to the amount of EVOH included in the multilayer structure (100 parts of the compatibilizer (b2-1) per 100 parts of EVOH).

The resin composition prepared above, the polar group-containing resin (a), the adhesive resin (c), and the base material resin (d1) were fed to a 5-type 7-layer multilayer coextrusion cast film forming apparatus. Multilayer coextrusion molding was performed under the following conditions to obtain a multilayer structure (film) having a 4-type 7-layer structure of base material layer (D1)/polyolefin resin layer (B)/adhesive resin layer (C)/polar group-containing resin layer (A)/adhesive resin layer (C)/polyolefin resin layer (B)/base material layer (D1). The thicknesses (µm) of the layers of the multilayer structure were 20/20/5/10/5/20/20.

### (Multilayer Coextrusion Molding Conditions)

- Polar group-containing resin layer (A) extruder: 40-mm diameter single screw extruder (barrel temperature: 220°C)
- Polyolefin resin layer (B) extruder: 40-mm diameter single screw extruder (barrel temperature: 210°C)
- Adhesive resin layer (C) extruder: 32-mm diameter single screw extruder (barrel temperature: 210°C)
- Base material layer (D1) extruder: 50-mm diameter single screw extruder (barrel temperature: 210°C)
- Die: 5-type 7-layer feed block T-die (die temperature: 210°C)
- Take-up speed: 11 m/minute
- Roll temperature: 80°C

### <Examples 2 to 8, Comparative Examples 1 to 3>

Multilayer structures were produced in the same manner as in Example 1 except for the changes shown in Table 1, and various evaluations were conducted according to the following methods.

### [Evaluation of Image Clarity]

The image clarity (transparency) of the multilayer structures of Examples 1 to 8 and Comparative Examples 1 to 3 was determined by a transmission method in compliance with JIS K 7374 "Plastics-Determination of image clarity". In the measurement, the film test piece was set such that the film mechanical direction was the vertical direction. An image clarity meter ICM-1 available from Suga Test Instruments, Co., Ltd. was used as a measuring instrument. An optical mask with a width of 1.0 mm was used.

### [Evaluation of Impact Resistance]

The impact strength of the multilayer structures of Examples 1 to 8 and Comparative Examples 1 to 3 was evaluated by the method A in compliance with JIS K 7124-1 "Plastics film and sheeting-Determination of impact resistance by the free-falling dart method" using an aluminum dart with a diameter of 38 mm and a mass of 32 g in an atmosphere at 23°C and 50% RH, using No.613 Dart Impact Tester available from Toyo Seiki Seisaku-sho, Ltd.

### [Evaluation of Recyclability]

The film of Example 1 was pulverized and melt-kneaded using a twin screw extruder (TEX30α available from The Japan Steel Works, Ltd., D=25 mm, L/D=56) at a setting temperature of 210°C with a screw rotational speed of 300 rpm and a production volume of 20 kg/h to prepare a recycle composition. The resulting recycle composition was formed into a film with a film thickness of 0.1 mm, using a single layer T-die film forming machine (available from GM Engineering Co., Ltd., 40 mm in diameter, lip gap: 0.3 mm) at a setting temperature of 220°C and a screw rotational speed of 60 rpm. The impact resistance of the prepared film was measured by the same method as described above. The same film (Reference Example) as Example 1 was prepared except that no compatibilizer was contained, and the impact resistance was measured similarly.

**Table 1**

| | Polyolefin resin layer (B) | | | | Adhesive resin | Evaluation items | |
|---|---|---|---|---|---|---|---|
| | Polyolefin resin | Compatibilizer | Compatibilizer content (parts by mass per 100 parts by mass of polyolefin resin) | Compatibilizer MFR (g/10 min) (190°C, load of 2160 g) | | Image clarity (%) | Impact resistance dart impact (g) |
| Example 1 | b1-1 | b2-1 | 100 | 24 | c1 | 70.7 | 360 |
| Example 2 | b1-1 | b2-2 | 100 | 6 | c1 | 87.6 | 326 |
| Example 3 | b1-2 | b2-1 | 15 | 24 | c2 | 86.1 | 270 |
| Example 4 | b1-2 | b2-1 | 100 | 24 | c2 | 91.5 | 300 |
| Example 5 | b1-2 | b2-1 | 180 | 24 | c2 | 85 | 255 |
| Example 6 | b1-2 | b2-1+b2-3 | 100 | 80 | c2 | 95.5 | 270 |
| Example 7 | b1-2 | b2-1+b2-3 | 100 | 120 | c2 | 93.1 | 255 |
| Example 8 | b1-2 | b2-1+b2-3 | 100 | 580 | c2 | 92.3 | 210 |
| Comparative Example 1 | b1-1 | b2-3 | 100 | 660 | c1 | 66.2 | 129 |
| Comparative Example 2 | b1-2 | b2-1 | 220 | 24 | c2 | 44 | 135 |
| Comparative Example 3 | b1-2 | b2-3 | 100 | 660 | c2 | 702 | 165 |

**Table 2**

| | Recyclability (impact resistance (dart impact) (g)) |
|---|---|
| Example 1 | 373 |
| Reference Example | 201 |

It can be understood that Examples 1 to 8 are superior in image clarity (transparency) and dart impact (impact resistance) of the multilayer structure, because of the inclusion of a particular amount of a compatibilizer having a particular MFR in the polyolefin resin layer (B), compared to Comparative Examples 1 and 3 containing a compatibilizer having a MFR outside the range specified by the present disclosure, and Comparative Example 2 with a compatibilizer content outside the range specified by the present disclosure.

Table 2 indicates that the inclusion of a particular amount of a compatibilizer having a particular MFR in the polyolefin resin layer (B) improves the recyclability, compared to the case including no compatibilizer.

When different resin layers are co-extruded as in the above examples, the resin flows tend to be disturbed at a section where the resin layers merge (interface between the resin layers), because the flowability varies among the melted resins of the resin layers. The resins with different MFRs are mixed in the polyolefin resin layer containing a compatibilizer. Therefore, when the polyolefin resin layer containing a compatibilizer with a MFR significantly different from that of the polyolefin resin is an intermediate layer of the multilayer structure, as in Comparative Example 1, in addition to the resin disturbance that occurs in the resin layer interface, more minute disturbances occur at the section where the polyolefin resin layer and the adjacent layer merge. This presumably caused reduction in transparency and mechanical strength (impact resistance) of the multilayer structure.

While specific forms of the embodiments of the present disclosure have been shown in the above examples, the examples are merely illustrative but not limitative. It is contemplated that various modifications apparent to those skilled in the art could be made within the scope of the present disclosure.

### INDUSTRIAL APPLICABILITY

The multilayer structure of the present disclosure can be suitably used as a gas barrier layer of packaging materials for various packaging material containers and packaging films for general foods, condiments such as mayonnaise and dressing, fermented foods such as miso, fat and oil foods such as salad oil, beverages, cosmetics, and pharmaceutical products. In addition, the multilayer structure of the present disclosure is suitable for being recycled.

## Claims

1. A multilayer structure, comprising:
a polar group-containing resin layer (A) comprising a polar group-containing resin (a) comprising an ethylene-vinyl alcohol copolymer and/or a polyamide;
a polyolefin resin layer (B) comprising a polyolefin resin (b1) and a compatibilizer (b2); and
an adhesive resin layer (C), wherein
the compatibilizer (b2) has a melt flow rate of 600 or less g/10 minutes (at 190°C with a load of 2160 g), and
the compatibilizer (b2) has a content of 10 to 200 parts by mass per 100 parts by mass of the polar group-containing resin (a).

2. The multilayer structure according to claim 1, wherein the compatibilizer (b2) has a content of 1 to 99% by mass in the polyolefin resin layer (B).

3. The multilayer structure according to claim 1 or 2, wherein the compatibilizer (b2) has a melt flow rate of 0.1 to 100 g/10 minutes (at 190°C with a load of 2160 g).

4. The multilayer structure according to any one of claims 1 to 3, wherein the compatibilizer (b2) is a maleic anhydride-modified ethylene-butene copolymer.

5. The multilayer structure according to any one of claims 1 to 3, wherein the compatibilizer (b2) is an ethylene-vinyl acetate copolymer.

6. The multilayer structure according to any one of claims 1 to 5, wherein a melt flow rate ratio (b1/b2) of the polyolefin resin (b1) to the compatibilizer (b2) is 0.003 to 300.

7. The multilayer structure according to any one of claims 1 to 6, wherein the polyolefin resin layer (B) comprises less than 5% by mass of an inorganic filler as an optional component.

8. The multilayer structure according to any one of claims 1 to 7, wherein the polyolefin resin (b1) is one or more polyethylenes selected from the group consisting of linear low-density polyethylene, low-density polyethylene, very-low-density polyethylene, medium-density polyethylene, and high-density polyethylene.

9. The multilayer structure according to any one of claims 1 to 8, further comprising a base material layer (D1).

10. A resin composition, comprising:
a polar group-containing resin (a) comprising an ethylene-vinyl alcohol copolymer and/or a polyamide,
a polyolefin resin (b1),
a compatibilizer (b2), and
an adhesive resin,
wherein the compatibilizer (b2) has a melt flow rate of 600 or less g/10 minutes (at 190°C with a load of 2160 g), and
wherein the compatibilizer (b2) has a content of 10 to 200 parts by mass per 100 parts by mass of the polar group-containing resin (a).
